**Europäisches Patentamt**

(19) **European Patent Office**

**Office européen des brevets**

(11) Publication number : **0 418 573 B1**

# (12) EUROPEAN PATENT SPECIFICATION

(45) Date of publication of patent specification :
20.10.93 Bulletin 93/42

(51) Int. Cl.⁵ : **B01J 31/18**, B01J 31/20,
B01J 37/06, B01J 37/14

(21) Application number : **90115964.0**

(22) Date of filing : **21.08.90**

(54) **Process for treating new or aged graphite powder to improve its effectiveness as a support for metal catalysts.**

(30) Priority : **29.08.89 US 399963**

(43) Date of publication of application :
**27.03.91 Bulletin 91/13**

(45) Publication of the grant of the patent :
**20.10.93 Bulletin 93/42**

(84) Designated Contracting States :
**BE CH DE ES FR GB IT LI NL**

(56) References cited :
**DE-C- 3 620 425**
**US-A- 4 055 628**
**US-B- 310 271**

(73) Proprietor : **BASF Corporation**
**9 Campus Drive**
**Parsippany, NJ 07054 (US)**

(72) Inventor : **Losier, Thomas Philip**
**214 Live Oak Lane**
**Lake Jackson, TX 77566 (US)**
Inventor : **Agnew, Thomas Wesley**
**618 Dogwood**
**Lake Jackson, TX 77566 (US)**
Inventor : **Kageler, Paul Leon**
**507 Huckleberry**
**Lake Jackson, TX 77566 (US)**
Inventor : **Parrinello, Michael Francis**
**512 Circle Way**
**Lake Jackson, TX 77566 (US)**

(74) Representative : **Springer, Hans Jörg, Dr. et al**
**BASF Aktiengesellschaft, Patentabteilung**
**ZDX - C 6**
**D-67056 Ludwigshafen (DE)**

Jouve, 18, rue Saint-Denis, 75001 PARIS

## Description

This invention relates to a process for the treatment of graphite powder. More particularly, this invention relates to a process for treating new or aged graphite powder to improve its effectiveness as a support for metal catalysts.

The manufacture of supported metal catalysts may be accomplished by varying techniques and processes for pre-treating the support material. These pre-treatment processes frequently involve altering either the physical and/or chemical characteristics of the support. Catalysts are then usually made by either precipitating or impregnating the treated support with the metal catalysts. The characteristics of the resulting catalyst are often a strong function of the pre-treatment process.

Richard, D., et al, Preparation of Highly Dispersed, Carbon Supported, Platinum Catalysts, Stud. Surf. Sci. Catal., 31 (Prep Catal. IV), p. 71-81, discloses the preparation of highly dispersed platinum catalysts supported on high specific area graphite including the steps of:

1) functionalizing graphitic or pre-graphitic planes with strong oxidizing agents such as $HNO_3$, $H_2O_2$ and NaOCl, and

2) impregnating platinum complex cations on the edge sites of the graphite. The amount of platinum fixed to the graphite support is increased by the oxidation.

Kunz, U.S. Patent No. 4,028,274 discloses a process for preparing platinum catalysts, particularly useful in electrochemical cells, by partially graphitizing a carbon powder, including the steps of: 1) oxidizing the graphitized carbon particles with a metal oxidizing catalyst, preferably an aqueous salt solution of iron, lead, copper, silver or platinum; 2) subjecting the treated particles to an oxidizing atmosphere at temperatures high enough to oxidize the particles (pure oxygen is applied at a temperature of about 500°C); 3) cooling the material under nitrogen to prevent oxidation, and 4) washing with a 50% $HNO_3$ solution and drying under vacuum at 110°C.

McCarroll, et al U.S. Patent No. 4,122,040 discloses a process of preparing a supported platinum group metal catalyst including the steps of: 1) initially heat treating graphite containing carbon in an inert atmosphere at a temperature between 900 and 3,300°C, and subsequently cooling; 2) oxidizing a material by reheating at a temperature between 1,000°C and 3,000°C; and 3) impregnating a metal catalyst thereon.

US 4 055 628 describes a method for the preparation of graphite containing carbon which comprises treating a high surface area carbon having a BET surface area of at least 500 $m^3$/g to the steps of

(1) an initial heat treatment in an inert atmosphere at a temperature between 900°C and 3300°C;

(2) oxidation stage by heating in an oxidizing atmosphere at a temperature between 300°C and 1200°C; and

(3) further heat treatment in an inert atmosphere at a temperature between 1000°C and 3000°C. A pre-treating of the graphite which prevents to consume large amounts of the starting graphite material when heated in an oxidizing atmosphere is not described.

It has been unexpectedly discovered that graphite support material can be pre-treated utilizing a mixture of nitric acid and sulfuric acid, and controlled heating to produce a support for metal catalysts having a multi-fold increase in surface area with respect to supports prepared without such pre-treatment. The resulting catalyst impregnated or precipitated on such a pre-treated support has a multi-fold increase in catalyst surface area relative to catalysts prepared with untreated material, and also has a significantly higher activity and specificity. In the process of the invention, graphite is contacted with a mixture of nitric acid and sulfuric acid, followed by heating to produce a support of increased surface area. The concentration of the acids, temperature and duration of heating may be varied to produce a tailored support having a pre-selected surface area necessary to produce a supported catalyst for optimum performance under pre-selected conditions.

It was common in the prior art methods of preparing catalysts to consume large amounts of the starting graphite material. This often occurred when the graphite was heated in uncontrolled oxidizing atmospheres to a temperature above 470°C. An advantage of the instant invention is that graphite so pre-treated can be heated to extremely high temperatures without consuming a large amount of the sample. For example, graphite pre-treated according to the invention has been heated to 700°C for a period of 6 hours without consuming a substantial portion of the starting material. Another advantage of the instant invention is that new graphite may be treated to obtain a BET surface area comparable to that of aged graphite which heretofore was not obtainable. Still further, the instant invention provides the advantage of producing a graphite support having an increased surface area which has been tailored to optimize catalyst performance and which reduces the amount of unreactive catalyst positioned on the support in unreactive locations. These and other objects, features and advantages will be apparent from the following detailed description and appended claims.

This invention embodies a process for the treatment of graphite to be utilized as a support for metal catalyst including the steps of 1) treating graphite with a mixture of nitric acid and sulfuric acid in concentration ratio of 10:90 to 90:10 respectively, and (2) heating the treated graphite from a temperature ranging from 100°C to 1200°C in the presence of an oxygen-containing gas stream.

The graphite utilized in this process may be new or aged graphite. That is, the graphite may include graphite regenerated from previously prepared metal catalysts having a graphite support. Preferably, the graphite is freshly milled. Typically, such freshly milled graphite has a BET surface area ranging from 1.5 m$^2$/g to is 3.5 m$^2$/g, and preferably 3 m$^2$/g. This surface area is increased by the subject invention process to approximately 26.8 m$^2$/g. The instant invention may be used to treat new graphite to obtain a BET surface area comparable to graphite which has been aged for many years in the presence of oxidizing agents. A suitable milled graphite is available from Asbury Mills, of New Jersey. Typically, the aged graphite powder has a BET surface area ranging from 5 m$^2$/g to 11 m$^2$/g and preferably 7 m$^2$/g. This surface area is increased by the process to approximately 26 m$^2$/g. The surprising and unexpected phenomenon associated with this significant increase in specific surface area was the observation that the average particle size of the treated graphite particles remained approximately the same. Catalysts made using the modified graphite as the support material also exhibited a corresponding increase in catalyst surface area relative to the untreated material.

In the pre-treatment process, the starting graphite material is contacted with a mixture of nitric acid and sulfuric acid. The mixture contains nitric acid in quantities ranging from 10 percent to 90 percent by volume of the total acid mixture, preferably 10 percent to 60 percent and most preferably between 10 percent to 30 percent by volume. The mixture contains sulfuric acid in quantities ranging from 10 percent to 90 percent by volume of the total acid mixture, preferably 40 percent to 90 percent, and most preferably 70 percent to 90 percent by volume. For the ranges disclosed herein and in the examples and claims which follow, the nitric acid used and contemplated has a concentration of 70 percent and the sulfuric acid used and contemplated has a concentration of about 97 percent. Concentrations of nitric acid and sulfuric acid varying from the above are considered within the scope of the invention provided that the adjusted volume percentage utilized is consistent with the above volume percentages and concentrations. The volume of the acid mixture used to treat the graphite ranges from 100 ml to 1.5 liters and preferably from 200 ml to 500 ml per 250 grams of graphite treated. The graphite is contacted with the acid mixture for 10 minutes to 4 hours and preferably from 0.5 to 1.5 hours Preferably, the mixture of graphite and acids is heated to a temperature ranging from 25°C to 110°C, and most preferably to 95°C to produce a consistent slurry.

Preferably, the contacted graphite and acid is cooled to a temperature safe for handling and is preferably filtered to remove any excess of acid solution leaving damp graphite as the filter cake.

The damp graphite is then heated, preferably in a tube furnace, to a temperature ranging from 100°C to 1200°C, preferably 500°C to 1200°C, and most preferably 1000°C. The heat treatment temperature is maintained for a period ranging from 2 minutes to 3 hours, preferably from 5 minutes to 2 hours, and most preferably 5 minutes. A tube furnace is the preferred heating means since it allows for controlled heating and oxidation of the graphite, variations in which often drastically alter the characteristics of the resultant graphite support. The heating step is conducted in the presence of an oxygen-containing gas stream. The concentration of oxygen in the gas streams ranges from 1 percent to 100 percent, preferably 2 percent to 20 percent, and most preferably 5 percent. The flow rate in the gas streams ranges from 100 cm$^3$/min to 700 cm$^3$/min, preferably 300 cm$^3$/min to 500 cm$^3$/min, and most preferably about 500 cm$^3$/min, per 50 grams of graphite treated.

Thereafter, a metal catalyst, preferably platinum, is precipitated or impregnated onto the pre-treated graphite powder prepared as described above. Methods of precipitating or impregnating a metal catalyst onto a support are well known to those skilled in the art. Such methods are disclosed in U.S. Patent Nos. 4,028,274; 4,122,040 and 3,060,133, the disclosures of which are hereby incorporated by reference.

The examples which follow illustrate the practice of the subject invention. These examples are by way of illustration only, and should not be interpreted as limiting the scope of the invention in any way.

Example I

In this example, approximately 200 grams of a new graphite having a BET surface area of approximately 2.5 m$^2$/g was pre-treated for 1 hour with mixtures of $H_2SO_4$ and $HNO_3$ of varying concentrations at 100°C. The pre-treated graphite was subsequently heated in a tube furnace at 1000°C for 5 minutes in the presence of air. The BET surface area of the graphite was measured after the pre-treatment with the acid mixture and heat treatment. The data are summarized in Table I.

## TABLE I

| Acid Treatment $HNO_3$ (vol%) | Acid Treatment $H_2SO_4$ (vol%) | BET Surface Area After Acid Treatment ($m^2/g$) | BET Surface Area After Heat Treatment ($m^2/g$) |
|---|---|---|---|
| 100 | 0 | 2.2 | 4.3 |
| 90 | 10 | 1.6 | 10.2 |
| 80 | 20 | 1.4 | 11.2 |
| 70 | 30 | 1.3 | 17.6 |
| 60 | 40 | 1.5 | 15.6 |
| 50 | 50 | 1.5 | 21.0 |
| 40 | 60 | 4.8 | 23.8 |
| 30 | 70 | 7.1 | 25.8 |
| 20 | 80 | 9.7 | 26.1 |
| 10 | 90 | 11.5 | 25.6 |
| 0 | 100 | 1.2 | 5.3 |

This example illustrates that the surface area of graphite can be increased by treating with a $H_2SO_4/HNO_3$ mixture and that such increase varies with the concentration ratio of $H_2SO_4$ to $HNO_3$. The example also illustrated that the surface area of the treated graphite can be further increased by heat treating.

Example II

In this example, approximately 20 grams of new graphite having a BET surface area of approximately 2.5 m2/g was pre-treated for 1 hour with mixtures of $H_2SO_4$ and $HNO_3$ in various concentrations at 100°C. Samples of the treated graphite were subsequently heated in a tube furnace for 5 minutes at 300, 700, and 1000°C in the presence of air. The BET surface areas of the samples are summarized in Table II.

**TABLE II**

| Acid Treatment HNO$_3$ (vol%) | Acid Treatment H$_2$SO$_4$ (vol%) | Tube Furnace Temperature (DEG. C) | BET Surface Area After Acid & Heat Treatment (m$^2$/g) |
|---|---|---|---|
| 10 | 90 | 300 | 10.9 |
| 30 | 70 | 300 | 9.1 |
| 50 | 50 | 300 | 8.1 |
| 10 | 90 | 700 | 20.7 |
| 30 | 70 | 700 | 19.8 |
| 50 | 50 | 700 | 15.6 |
| 10 | 90 | 1000 | 25.6 |
| 30 | 70 | 1000 | 26.8 |
| 50 | 50 | 1000 | 21.0 |

This example illustrates that the temperature at which the acid mixture treated graphite is heated affects the increase in surface area of the treated graphite.

Example III

In this example, approximately 200 grams of new graphite having a BET surface area of approximately 2.5 m$^2$/g was treated for 1 hour with 50/50 (vol%) mixture of H$_2$SO$_4$/HNO$_3$ at 100°C. The acid mixture treated graphite samples were then heated in a tube furnace for 5, 30, 60 and 120 minutes at 1000°C in the presence of air. The BET surface areas of the samples are summarized in Table III.

**TABLE III**

| Duration of Heat Treatment (minutes) | BET Surface Area (m$^2$/g) |
|---|---|
| 5 | 20.6 |
| 30 | 19.7 |
| 60 | 18.3 |
| 120 | 17.3 |

This example illustrates that heat treatment of the acid mixture treated graphite for extended periods of time still increases the BET surface area of the graphite. However, the BET surface area increase has an inversely proportion relationship with the duration of heat treatment beyond 5 minutes.

Example IV

In this example, catalyst made from non-treated and treated graphite were compared. First a sample of approximately 200 grams of new graphite having a BET surface area of approximately 2.5 m$^2$/g was treated for 1 hour with a mixture of 90 vol% $H_2SO_4$ and 10 vol% $HNO_3$ at 100°C. The first sample, after treatment, had a resultant BET surface area of 11.5 m$^2$/g. Hydroxylamine catalysts were prepared using the first treated sample and a second untreated sample of new graphite, approximately 200 grams, having a BET surface area of approximately 2.5 m$^2$/g. A catalyst was precipitated on both the treated and untreated graphite support by a method well-known in the art of catalyst preparation such as those methods disclosed in U.S. Patent Nos. 4,028,274; 4,122,040 and 3,060,133. A comparison of the catalytic performance of both samples is summarized in Table IV.

**TABLE IV**

| Catalyst Support | Average Reaction Rate g(HA)/l/hr | Reaction Rate Std. Dev. g(HA)/l/hr | Specificity (%) | Specificity Std. Dev. (%) |
|---|---|---|---|---|
| New Graphite | 7.21 | ±1.62 | 77.84 | ±9.0 |
| Acid Treated Graphite | 9.74 | ±1.18 | 87.72 | ±2.4 |

This example illustrates that catalysts prepared from graphite treated with a mixture of $H_2SO_4$ and $HNO_3$ have an increased reaction rate and specificity in comparison to catalysts prepared from untreated graphite.

Example V

This example illustrates an alternative embodiment of the present invention wherein the graphite is pre-treated by a process utilizing incremental increases in heat treating temperatures.

Approximately, 200 grams of graphite was contacted with approximately 1 liter of a mixture of acids comprising 60 percent nitric acid and 40 percent sulfuric acid by volume. The nitric acid used had a concentration of about 70 percent, and the sulfuric acid used had a concentration of about 97 percent. The mixture of graphite and acid was heated in a round bottom flask at 95°C for approximately 3 minutes. The mixture was then cooled until it was safe to handle (approximately 1 hour). A fritted filter funnel was then utilized to filter the graphite and acid leaving a damp graphite filtercake. Rinsing the mixture with water was avoided. Approximately 50 grams of the damp, acid treated graphite was removed from the filter and transferred to a tube furnace where it was heated to 250°C and maintained for approximately 20 minutes in the presence of an air stream at a flow rate of 500 cm$^3$/min. The temperature of the tube furnace was then raised to 800°C and maintained for approximately 40 minutes in the presence of an air stream at a flow rate of 500 cm$^3$/min to produce dried clumps of graphite particles. The temperature of the tube furnace and its contents were then reduced to room temperature. The dried clumps of graphite were removed from the tube furnace and broken apart to produce a fine powder of graphite. The fine graphite powder was then heated in the tube furnace at 800°C and maintained for approximately 40 minutes in the presence of an air stream at a flow rate of 500 cm$^3$/min.

**Claims**

1. A process for pre-treating graphite to be utilized as a support for a metal catalyst comprising the steps of
   a) contacting graphite with a mixture of nitric acid and sulfuric acid; and
   b) heating said contacted graphite in the presence of an oxygen-containing gas stream to a temperature ranging from about 100°C to about 1200°C, wherein said gas stream comprises 1 percent to 100 percent oxygen and has a flow rate ranging from 100 cm$^3$/min to 700 cm$^3$/min per 50 grams of graphite treated.

2. A process as set forth in claim 1 wherein said mixture of nitric acid and sulfuric acid comprise 10 percent to 90 percent by volume of nitric acid, and 10 percent to 90 percent by volume of sulfuric acid.

3. A process as set forth in claims 1 to 2 wherein said graphite comprises graphite regenerated from graphite supported catalyst.

4. A graphite support prepared by a process comprising the steps of :
(a) contacting graphite with a mixture of nitric acid and sulfuric acid; and
(b) heating said contacted graphite in the presence of an oxygen-containing gas stream, to a temperature ranging from 100°C to 1200°C, wherein said gas stream comprises 1 percent to 100 percent oxygen and has a flow rate ranging from 100 cm$^3$/min to 700 cm$^3$/min per 50 grams of graphite treated.

## Patentansprüche

1. Verfahren zur Vorbehandlung von als Träger für einen Metallkatalysator zu verwendendem Graphit, welches die folgenden Schritte umfaßt:
(a) Graphit wird mit einem Gemisch aus Salpetersäure und Schwefelsäure in Berührung gebracht; und
(b) der in Berührung gebrachte Graphit wird in Gegenwart eines sauerstoffhaltigen Gasstroms auf eine Temperatur im Bereich von 100°C bis 1200°C erhitzt, dadurch gekennzeichnet, daß der Gasstrom 1 Prozent bis 100 Prozent Sauerstoff enthält und einen Durchsatz im Bereich von 100 cm$^3$/Min. bis 700 cm$^3$/Min. pro 50 Gramm behandeltem Graphit aufweist.

2. Verfahren nach Anspruch 1, dadurch gekennzeichnet, daß das Gemisch aus Salpetersäure und Schwefelsäure zwischen 10 und 90 Volumenprozent Salpetersäure und zwischen 10 und 90 Volumenprozent Schwefelsäure enthält.

3. Verfahren nach den Ansprüchen 1 und 2, dadurch gekennzeichnet, daß der Graphit aus Graphitträgerkatalysator regenerierten Graphit enthält.

4. Graphitträger, welcher nach einem die folgenden Schritte umfassenden Verfahren hergestellt wird:
(a) Graphit wird mit einem Gemisch aus Salpetersäure und Schwefelsäure in Berührung gebracht; und
(b) der in Berührung gebrachte Graphit wird in Gegenwart eines sauerstoffhaltigen Gasstroms auf eine Temperatur im Bereich von 100°C bis 1200°C erhitzt, dadurch gekennzeichnet, daß der Gasstrom 1 Prozent bis 100 Prozent Sauerstoff enthält und einen Durchsatz im Bereich von 100 cm$^3$/Min. bis 700 cm$^3$/Min. pro 50 Gramm behandeltem Graphit aufweist.

## Revendications

1. Procédé de traitement préalable de graphite à utiliser à titre de support d'un catalyseur à base de métal, caractérisé en ce qu'il comprend les étapes consistant à
(a) mettre le graphite en contact avec un mélange d' acide nitrique et d'acide sulfurique et
(b) chauffer ledit graphite mis en contact, en présence d'un courant de gaz contenant de l'oxygène, jusqu'à une température qui varie de 100°C à 1200°C, où le courant de gaz précité comprend de 1% à 100% d'oxygène et possède une vitesse d'écoulement qui varie de 100 cm$^3$/min à 700 cm$^3$/min par 50 grammes de graphite traité.

2. Procédé suivant la revendication 1, caractérisé en ce que le mélange précité d'acide nitrique et d'acide sulfurique comprend de 10% à 90% en volume d'acide nitrique et de 90% à 10% en volume d'acide sulfurique.

3. Procédé suivant l'une quelconque des revendications 1 et 2, caractérisé en ce que le graphite précité comprend du graphite régénéré provenant d'un catalyseur supporté par du graphite.

4. Support de graphite préparé par un procédé qui comprend les étapes consistant à
(a) mettre le graphite en contact avec un mélange d' acide nitrique et d'acide sulfurique et
(b) chauffer ledit graphite mis en contact, en présence d'un courant de gaz contenant de l'oxygène, jusqu'à une température qui varie de 100°C à 1200°C, où le courant de gaz précité comprend de 1% à 100% d'oxygène et possède une vitesse d'écoulement qui varie de 100 cm³/min à 700 cm³/min par 50 grammes de graphite traité.